(19) Europäisches Patentamt
European Patent Office
Office européen des brevets

(11) **EP 4 604 366 A1**

(12) **EUROPEAN PATENT APPLICATION**
published in accordance with Art. 153(4) EPC

(43) Date of publication:
**20.08.2025   Bulletin 2025/34**

(21) Application number: **23877076.2**

(22) Date of filing: **14.09.2023**

(51) International Patent Classification (IPC):
*H02K 3/18* (2006.01)        *H02K 3/28* (2006.01)

(52) Cooperative Patent Classification (CPC):
**H02K 3/18; H02K 3/28**

(86) International application number:
**PCT/JP2023/033505**

(87) International publication number:
**WO 2024/080070 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.10.2022   JP 2022165072**

(71) Applicant: **DENSO CORPORATION
Kariya-city, Aichi 448-8661 (JP)**

(72) Inventor: **SEGUCHI, Masahiro
Kariya-city, Aichi 448-8661 (JP)**

(74) Representative: **Kuhnen & Wacker
Patent- und Rechtsanwaltsbüro PartG mbB
Prinz-Ludwig-Straße 40A
85354 Freising (DE)**

(54) **WINDING FIELD ROTOR**

(57)     In a winding field type rotating electric machine, a winding field rotor (60) includes a rotor core (61) having main pole portions (62) provided for each magnetic pole arranged in a circumferential direction and protruding in a radial direction, and a field winding (70) wound around the main pole portions. The field winding has coil bodies (90) formed by winding a conductor wire in multiple layers in the radial direction for each of the main pole portions, and each of the coil bodies is connected in series in the circumferential direction. Each of the coil bodies has an inner end (93) which is one end of the conductor wire at a position on a radially inner side of the coil body, and an outer end (94) which is the other end of the conductor wire at a position on a radially outer side of the coil body. In the coil body, the inner end is connected to the inner end of another coil body adjacent to the coil body on one circumferential side, and the outer end is connected to the outer end of another coil body adjacent to the coil body on the other circumferential side.

FIG. 5

EP 4 604 366 A1

## Description

### CROSS REFERENCE TO RELATED APPLICATIONS

This application is based on Japanese Application No. 2022-165072 filed on October 13, 2022, the contents of which are incorporated herein by reference.

### TECHNICAL FIELD

The present disclosure relates to a winding field rotor.

### BACKGROUND

In a winding field type rotating electric machine, a field winding is wound around each main pole of a rotor core, and a field magnetic field is generated by passing current through the field winding. In this case, the field windings are wound in mutually opposite directions at adjacent magnetic poles in a circumferential direction so that the N poles and S poles are arranged alternately.

Also, as a technique for winding the field winding around each main pole, a known configuration is to wind a necessary number of turns of wire for each main pole, i.e., to complete the winding for each pole, and then continue the winding to the adjacent pole in the circumferential direction. For example, Patent Document 1 discloses a configuration in which a winding that is radially multi-layered is completed around each main pole for each magnetic pole, and between each of adjacent magnetic poles in the circumferential direction, the winding at a radially innermost position of one magnetic pole is connected to the winding at a radially outermost position of the other magnetic pole, thereby making the field winding continuous at each of adjacent magnetic poles in the circumferential direction.

### PRIOR ART DOCUMENT

### PATENT DOCUMENT

Patent Document 1: JP 2012-222941 A

### SUMMARY OF INVENTION

However, in the above-described configuration in which the winding is completed for each magnetic pole and continues in the circumferential direction, when connecting the windings between circumferentially adjacent magnetic poles, it is conceivable that a large twisting of the conductor wire is required to connect the winding at the radially innermost position and the winding at the radially outermost position. In this case, there is a concern that a large load will be placed on the conductor wire and that an insulating coating of the conductor wire will be damaged. Moreover, in order to avoid excessive twisting of the conductor wire, it is conceivable to connect the field windings of each magnetic pole using a separate junction wire. However, in this case, there are concerns that the configuration will become more complicated and the number of work steps will increase.

The present disclosure has been made in consideration of the above circumstances, and has an object to provide a winding field rotor that allows the field winding to be wound simply and appropriately.

A winding field rotor in the present disclosure is applied to a winding field type rotating electric machine, and includes a rotor core having main pole portions provided for each magnetic pole arranged in a circumferential direction and protruding in a radial direction, and a field winding wound around the main pole portions.

The field winding has coil bodies formed by winding a conductor wire in multiple layers in the radial direction for each of the main pole portions, and each of the coil bodies is connected in series in the circumferential direction.

Each of the coil bodies has an inner end which is one end of the conductor wire at a position on a radially inner side of the coil body, and an outer end which is the other end of the conductor wire at a position on a radially outer side of the coil body.

In the coil body, the inner end is connected to the inner end of another coil body adjacent to the coil body on one circumferential side, and the outer end is connected to the outer end of another coil body adjacent to the coil body on the other circumferential side.

According to the above configuration, in the field winding of the winding field rotor, the coil bodies provided on each of the main pole portions adjacent in the circumferential direction are connected to each other at their inner ends on a radially inner side (i.e., inner layer side) and are connected to each other at their radially outer ends on a radially outer side (i.e., outer layer side), thereby being connected in series in the circumferential direction. In this case, the coil bodies are connected in series in the circumferential direction by connecting at the inner ends to each other and at the outer ends to each other, so that excessive twisting of the conductor wire in the radial direction does not occur. Therefore, the occurrence of a large load on the conductor wire and damage to the insulating coating of the conductor wire are suppressed. As a result, the field winding can be wound simply and appropriately.

### BRIEF DESCRIPTION OF THE DRAWINGS

The above and other objects, features and advantages of the present disclosure will become more apparent from the following detailed description made with reference to the accompanying drawings. In the drawings,

> FIG. 1 is an overall configuration diagram of a control system for a rotating electric machine;
> FIG. 2 is a diagram showing an inverter and its peripheral configuration;

FIG. 3 is a cross-sectional view of a rotor;

FIG. 4 is a diagram showing an electric circuit in the rotor;

FIG. 5 is a perspective view showing a configuration of a coil body;

FIG. 6 is a diagram showing a schematic diagram of connections between coil bodies;

FIG. 7 is a diagram schematically showing a connection between each of coil bodies;

FIG. 8 is a schematic diagram showing a state in which a coil body is wound around each main pole portion of a rotor core;

FIG. 9 is a perspective view showing an example of a configuration of a coil body;

FIG. 10 is a plan view showing a state in which a plurality of coil bodies are arranged in a circumferential direction and a radial direction;

FIG. 11 is a diagram showing a connection state of each winding portion with a diode and a capacitor; and

FIG. 12 is a schematic diagram showing a state in which a coil body is wound around each main pole portion of a rotor core in another example.

## DETAILED DESCRIPTION

One embodiment of a rotating electric machine according to the present disclosure will be described below with reference to the drawings. A control system including a rotating electric machine is mounted on a vehicle. The rotating electric machine is a driving power source of the vehicle.

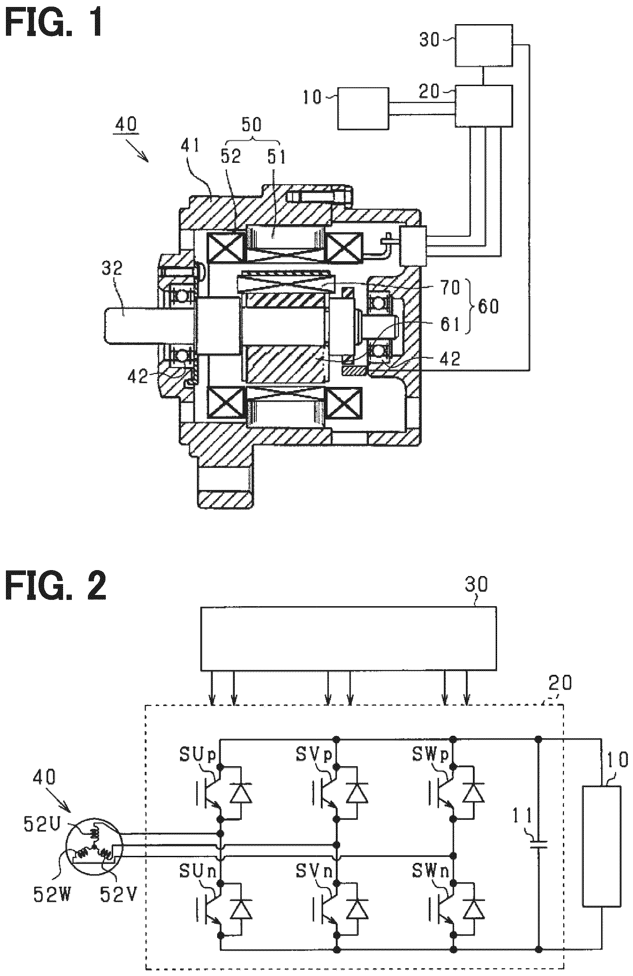

As shown in FIG. 1, the control system includes a DC power supply 10, an inverter 20, a control unit 30, and a rotating electric machine 40. The rotating electric machine 40 is a winding-field synchronous machine. For example, an integrated electromechanical drive system may be configured with the rotating electric machine 40, the inverter 20, and the control unit 30, or each of the rotating electric machine 40, the inverter 20, and the control unit 30 may be configured as individual components.

The rotating electric machine 40 includes a housing 41 and a stator 50 and a rotor 60 that are accommodated within the housing 41. The rotating electric machine 40 of the present embodiment is an inner rotor type rotating electric machine in which the rotor 60 is arranged radially inside the stator 50. The rotor 60 corresponds to a "winding field rotor."

The stator 50 includes a stator core 51 and a stator winding 52. The stator core 51 is made of laminated steel plates made of a soft magnetic material, and has an annular back yoke and a plurality of teeth protruding radially inward from the back yoke. The stator winding 52 is made of copper wire, for example, and includes U-, V-, and W-phase windings 52U, 52V, and 52W arranged with an electrical angle difference of 120 degrees from each other.

The rotor 60 includes a rotor core 61 and a field winding 70. The rotor core 61 is made of a soft magnetic material, for example, composed of laminated steel plates. The field winding 70 is made of, for example, aluminum wire. The aluminum wire has a small specific gravity and can reduce a centrifugal force when the rotor 60 rotates. Also, the field winding 70 is not limited to the aluminum wire, and may be, for example, a copper wire or a CNT (carbon nanotube).

A rotating shaft 32 is inserted through a center hole of the rotor core 61. The rotating shaft 32 is rotatably supported by a bearing 42 in the housing 41. The stator 50 and the rotor 60 are both arranged coaxially with the rotating shaft 32. In the following description, a direction in which the rotating shaft 32 extends is defined as an axial direction, a direction extending radially from the center of the rotating shaft 32 is defined as a radial direction, and a direction extending circumferentially about the rotating shaft 32 is defined as a circumferential direction.

As shown in FIG. 2, the inverter 20 is configured by serially connecting U, V, and W phase upper arm switches SUp, SVp, and SWp and U, V, and W phase lower arm switches SUn, SVn, and SWn. First ends of U-, V-, and W-phase windings 52U, 52V, and 52W are connected to connecting points between U-, V-, and W-phase upper arm switches SUp, SVp, and SWp and U-, V-, and W-phase lower arm switches SUn, SVn, and SWn. The second ends of the U-, V- and W-phase windings 52U, 52V and 52W are connected at a neutral point. That is, in the present embodiment, the U-, V-, and W-phase windings 52U, 52V, and 52W are star-connected. In the present embodiment, each switch SUp to SWn is an IGBT. A freewheel diode is connected in anti-parallel to each of the switches SUp to SWn.

A positive terminal of a DC power supply 10 is connected to the collectors of the U-, V-, and W-phase upper arm switches SUp, SVp, and SWp. A negative terminal of the DC power supply 10 is connected to the emitters of the U-, V-, and W-phase lower arm switches SUn, SVn, and SWn. A smoothing capacitor 11 is connected in parallel with the DC power supply 10.

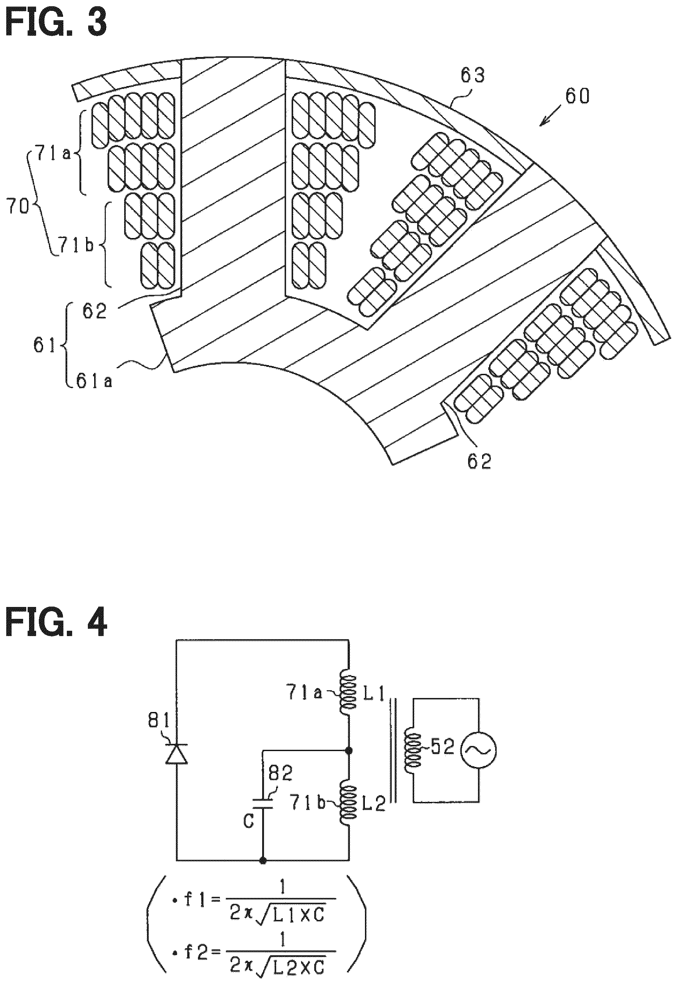

Next, the rotor 60 will be described with reference to FIG. 3.

The rotor core 61 has a cylindrical portion 61a and multiple main pole portions 62 protruding radially outward from the cylindrical portion 61a. The cylindrical portion 61a corresponds to a yoke portion. In the present embodiment, eight main pole portions 62 are provided at regular intervals in the circumferential direction. A winding holder 63 is provided at a tip of the main pole portion 62 in the radial direction, extending circumferentially like a brim and holding the field winding 70 from the outside in the circumferential direction.

The field winding 70 includes a first winding portion 71a and a second winding portion 71b arranged in the radial direction. In each main pole portion 62, the first winding portion 71a is wound radially outward, and the second winding portion 71b is wound radially inward relative to the first winding portion 71a. In each main pole portion 62, the direction in which current flows through the first winding portion 71a and the second winding portion 71b (current direction) is the same. Furthermore, among the main pole portions 62 adjacent to each other in the circumferential direction, the current direction of each winding portion 71 a, 71 b wound around one main pole portion 62 is opposite to the current direction of each winding portion 71 a, 71 b wound around the other main pole portion 62. Therefore, the magnetization directions of the main pole portions 62 adjacent to each other in the circumferential direction are opposite to each other. In the rotor 60, multiple magnetic poles (field poles) arranged in the circumferential direction are formed by each main pole portion 62 of the rotor core 61 and the field winding 70 wound around each main pole portion 62. In the present embodiment, the rotor 60 has eight magnetic poles, but the number of poles can be changed.

FIG. 4 shows an electric circuit on the rotor 60 side having the winding portions 71a and 71b. The first winding portion 71a and the second winding portion 71b are connected in series, and a diode 81, functioning as a rectifying element, is connected across both ends of the series connection of these winding portions 71a and 71b. In other words, the cathode of the diode 81 is connected to the first end of the first winding portion 71a, and the second end of the first winding portion 71a is connected to the first end of the second winding portion 71b. An anode of the diode 81 is connected to the second end of the second winding portion 71b. A capacitor 82 is connected in parallel to the second winding portion 71b. In FIG. 4, L1 indicates the inductance of the first winding portion 71a, L2 indicates the inductance of the second winding portion 71b, and C indicates the capacitance of the capacitor 82.

In the present embodiment, a series resonance circuit is configured by the first winding portion 71a, the capacitor 82 and the diode 81, and a parallel resonance circuit is configured by the second winding portion 71b and the capacitor 82. A first resonance frequency that is the resonance frequency of the series resonance circuit is referred to as f1, and a second resonance frequency that is the resonance frequency of the parallel resonance circuit is referred to as f2. The resonance frequency f1 and the resonance frequency f2 are represented by the following equations (eq1) and (eq2).
[Equation 1]

$$f1=1/2\pi\sqrt{(L1*C)} \ ... \ (eq1)$$

[Equation 2]

$$f2=1/2\pi\sqrt{(L2*C)} \ ... \ (eq2)$$

Returning to the explanation of FIG. 2, the control unit 30 generates drive signals for turning on and off the switches SUp to SWn that form the inverter 20. Specifically, in order to convert the DC power output from the DC power supply 10 into AC power and supply it to the U-, V-, and W-phase windings 52U, 52V, and 52W, the control unit 30 generates drive signals for turning on and off each of the arm switches SUp to SWn, and supplies the generated drive signals to the gates of each of the arm switches SUp to SWn.

The control unit 30 turns on and off each of the switches SUp to SWn so that the composite current of the fundamental wave current and the harmonic current flows through the phase windings 52U, 52V, and 52W. The fundamental wave current is a current that mainly causes the rotary electric machine 40 to generate torque. The harmonic current is a current that mainly excites the field winding 70 and causes the field current to flow through the field winding 70. That is, the control unit 30 controls the energization of the stator windings 52 by a current signal in which a harmonic current is superimposed on a fundamental current. The phase currents flowing through each of the phase windings 52U, 52V, and 52W are shifted by an electrical angle of 120°.

In the present embodiment, as described above, the field winding 70 has a first winding portion 71a wound radially outwardly around the main pole portion 62, and a second winding portion 71b wound radially inwardly around the main pole portion 62. According to the above configuration, the harmonic magnetic flux generated by harmonic current in the stator winding 52 is easily received by the first winding portion 71a which is an excitation coil, so that an excitation current is efficiently generated in the rotor 60.

A part or all of each function of the control unit 30 may be configured in hardware by, for example, one or a plurality of integrated circuits. Further, each function of the control unit 30 may be configured by, for example, software recorded in a non-transitional substantive recording medium and a computer executing the software.

Next, a specific configuration of the field winding 70 will be described.

As shown in FIG. 3, the field winding 70 uses a rectangular wire having a substantially rectangular cross-sectional shape (specifically, a substantially rectangular shape) as the conductor wire, and is configured by winding the rectangular wire in multiple layers so that the wire is aligned in the radial and circumferential directions. The rectangular wire is composed of a conductor portion and an insulating layer covering the conductor portion. In the example shown in FIG. 3, the first winding portion 71a and the second winding portion 71b constitutes the field winding 70, the first winding portion 71a is arranged in two layers in the radial direction, and the second winding portion 71b is arranged in two layers in the radial direction. However, the number of layers in the radial direction in each of the winding portions 71a, 71b may be other than two, and the number of layers may differ between the first winding portion 71a and the second winding portions 71b.

Further, the number of turns of each layer arranged in the radial direction (in other words, the number of rows of rectangular wire in the circumferential direction) differs between the radially inner side and the radially outer side. Specifically, when the layers are numbered from the radially outer side as the first layer, second layer, third layer, and fourth layer, the first layer has five windings, the second layer has four windings, the third layer has three windings, and the fourth layer has two windings. With regard to the first winding portion 71a and the second winding portion 71b, the first winding portion 71a has five and four windings in two radial layers, respectively, and the second winding portion 71b has three and two windings in two radial layers, respectively.

By making the number of windings different for each layer arranged in the radial direction as described above, it is possible to improve a space factor. The number of windings may be different for each of the winding portions 71a and 71b. If the space factor is ignored, it is also possible to make the number of windings the same for each layer aligned in the radial direction.

In particular, in the present embodiment, the field winding 70 has a plurality of coil bodies 90 each formed by winding a rectangular wire in multiple layers radially for each magnetic pole (each main pole portion 62), and the coil bodies 90 of each magnetic pole are connected in series in the circumferential direction.

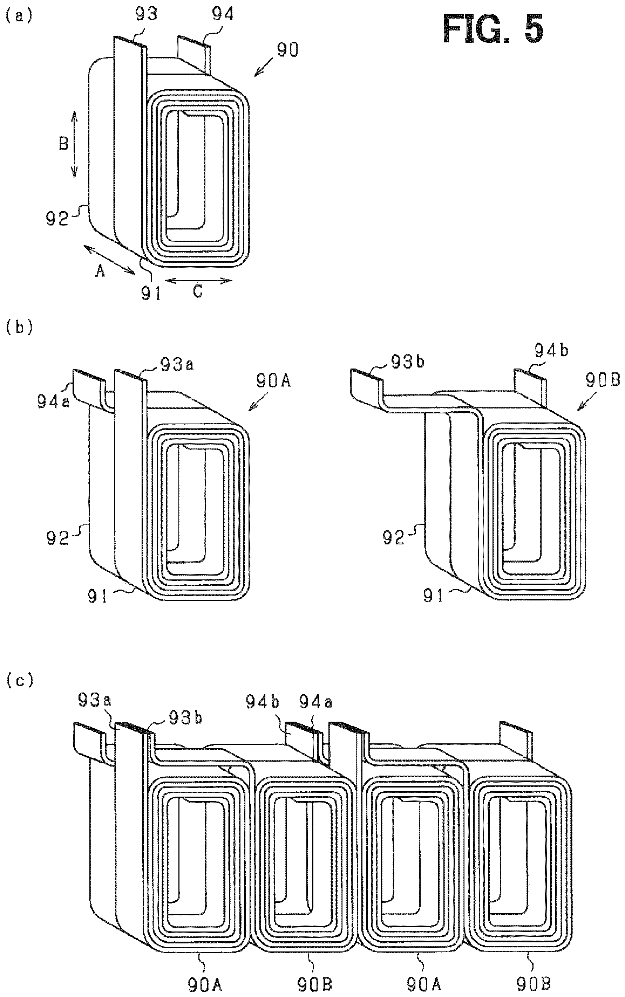

FIG. 5(a) is a perspective view showing the basic structure of the coil body 90 using the rectangular wire. In FIG. 5(a), a direction A is referred to as the radial direction, a direction B is referred to as the axial direction, and a direction C is referred to as the circumferential direction. In the configuration of FIG. 5(a), the number of windings in each layer is the same on the inside and outside in the radial direction, but the number of windings may be different on the inside and outside in the radial direction.

The coil body 90 is an air-core coil configured as an α-winding coil, and is integrally formed with two layers of windings arranged in the radial direction. In other words, the coil body 90 has an inner coil portion 91 and an outer coil portion 92, which are respectively radially inward (inner layer side) and radially outward (outer layer side) when attached to the main pole portion 62, and in each of these coil portions 91, 92, the rectangular wires are connected to each other on the inner circumference side of the coil. The coil body 90 can also be said to be a unit coil with two radial layers forming one unit. The inner coil portion 91 has a coil end 93 extending in the axial direction from a winding portion, and the outer coil portion 92 has a coil end 94 extending in the axial direction from a winding portion. The coil end 93 corresponds to the "inner end" and the coil end 94 corresponds to the "outer end". The coil body 90 is attached to the main pole portion 62 by inserting the main pole portion 62 into the hollow portion of the coil body 90.

In the field winding 70, the coil bodies 90 of each circumferentially adjacent magnetic pole are connected in series by joining the coil ends 93, 94 of each coil body 90 to each other, and this configuration will be described with reference to FIGS. 5(b) and (c). FIG. 5(b) shows two types of coil bodies 90 having the coil ends 93 and 94 with different configurations. In the following description, one of the two types of coil bodies 90 will be referred to as a "first coil body 90A" and the other as a "second coil body 90B." Additionally, the coil ends 93, 94 of the first coil body 90A are referred to as "coil ends 93a, 94a," and the coil ends 93, 94 of the second coil body 90B are referred to as "coil ends 93b, 94b."

As shown in FIG. 5(b), in the first coil body 90A, among the coil ends 93a, 94a of the inner coil portion 91 and the outer coil portion 92, the shape of the coil end 94a of the outer coil portion 92 is different from the coil end 94 shown in FIG. 5(a). Specifically, the coil end 94a of the outer coil portion 92 does not extend axially directly from the end position shown in FIG. 5(a), but extends circumferentially along an upper surface of the winding portion of the first coil body 90A and is bent axially at a position circumferentially shifted by one magnetic pole pitch, i.e., at a position approximately aligned horizontally with the coil end 93a of the inner coil portion 91.

In the second coil body 90B, among the coil ends 93b, 94b of the inner coil portion 91 and the outer coil portion 92, the shape of the coil end 93b of the inner coil portion 91 is different from the coil end 93 shown in FIG. 5(a). Specifically, the coil end 93b of the inner coil portion 91 does not extend axially directly from the end position shown in FIG. 5(a), but extends circumferentially in the opposite direction to the winding portion of the second coil body 90B and is bent axially at a position shifted circumferentially by one magnetic pole pitch.

In short, the first coil body 90A and the second coil body 90B are basically composed of one type of coil body 90 (the coil body 90 shown in FIG. 5(a)), but are composed of two types of coil bodies 90 whose coil ends 93, 94 have different shapes.

FIG. 5(c) is a diagram showing a state in which the coil bodies 90A and 90B arranged in the circumferential direction are connected in series. For the sake of convenience, FIG. 5(c) shows the coil bodies 90A, 90B arranged in a straight line rather than in an arc shape. In this case, on the radially inner side, the coil ends 93a, 93b of each coil body 90A, 90B are joined to each other, and on the radially outer side, the coil ends 94a, 94b of each coil body 90A, 90B are joined to each other. The coil ends 93, 94 may be joined by welding.

In an actual configuration in which the coil bodies 90A, 90B are arranged in an arc shape, the coil bodies 90A, 90B are not arranged in a straight line in a plan view, but are arranged so as to cross each other. Therefore, at least one of the coil ends 93a, 93b that are joined to each other may be raised in the axial direction on a line that intersects obliquely with an extension direction. This allows the coil ends 93 to be appropriately surface-joined to each other. For example, the surface-to-surface joining direction of the coil ends 93 may be oriented along a straight line extending from a rotation center point of the rotor 60. The same applies to the coil ends 94a and 94b.

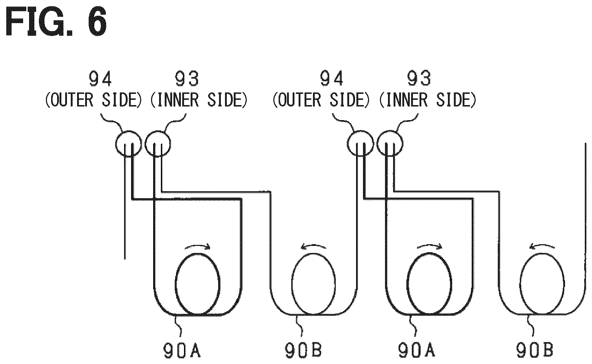

FIG. 6 is a diagram showing a schematic diagram of the connection of the coil bodies 90A, 90B in FIG. 5(c), and shows the connection state of the coil bodies 90A, 90B arranged in the circumferential direction. In FIG. 6, a left-right direction is the circumferential direction, and an up-down direction is the axial direction.

In FIG. 6, the first coil body 90A and second coil body 90B are arranged alternately in the circumferential direction, and each coil end 93, 94 on the radially inner side and outer side of each of the coil bodies 90A, 90B are connected at intervals of two magnetic pole pitches. In this case, the connection positions of the coil ends 93, 94 are between the magnetic poles, near a boundary (q-axis) between the circumferentially adjacent magnetic poles. The directions of current flow in the rectangular wire of the first coil body 90A and the second coil body 90B are opposite to each other.

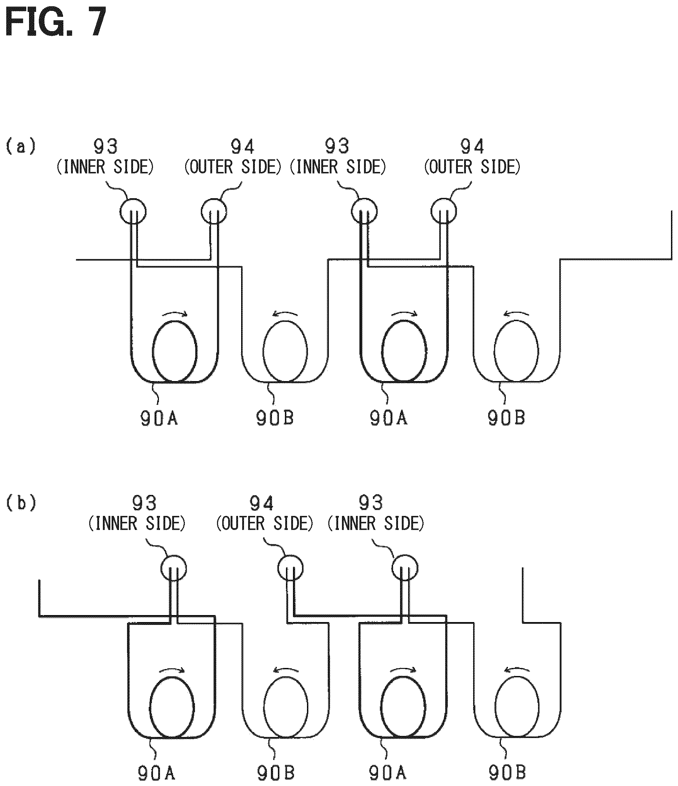

The configuration of each of the coil bodies 90A and 90B may be changed. Specifically, the configuration shown in FIG. 7(a) or FIG. 7(b) may be used. The configurations of FIGS. 7(a) and 7(b) are different from the configuration of FIG. 6 in the configurations of the coil ends 93, 94 of the coil bodies 90A, 90B.

In FIG. 7(a), the first coil body 90A has the same configuration as the coil body 90 in FIG. 5(a) (basic configuration of the α-winding coil). In contrast, in the second coil body 90B, each coil end 93b, 94b of the inner coil portion 91 and the outer coil portion 92 is extended circumferentially on the opposite side to the winding portion of the second coil body 90B, and is bent in the axial direction at a position shifted circumferentially by one magnetic pole pitch. The coil ends 93 on the radially inner side of the coil bodies 90A, 90B are joined to each other, and the coil ends 94 on the radially outer side of the coil bodies 90A, 90B are joined to each other. In this case, the connection positions of the coil ends 93, 94 are spaced apart by one magnetic pole pitch and are near the boundary (q-axis) between circumferentially adjacent magnetic poles.

In FIG. 7(b), in the first and second coil bodies 90A and 90B, the coil ends 93 and 94 of the inner coil portion 91 and the outer coil portion 92 are each extended in the circumferential direction as shown in the figure. The coil ends 93 on the radially inner side of the coil bodies 90A, 90B are joined to each other, and the coil ends 94 on the radially outer side of the coil bodies 90A, 90B are joined to each other. In this case, the connection positions of the coil ends 93, 94 are spaced apart by one magnetic pole pitch and are located near the center (d-axis) of each magnetic pole.

In all of the configurations shown in FIGS. 6, 7(a) and (b) above, in the first coil body 90A, the coil end 93, which is one end of the rectangular wire (conductor wire), is connected to the coil end 93 of the adjacent second coil body 90B on one side in the circumferential direction. The coil end 94, which is the other end of the rectangular wire, is connected to the coil end 94 of the adjacent second coil body 90B on the other side in the circumferential direction. The second coil body 90B has a similar configuration. In this case, at least one of the coil ends 93, 94 of each of the coil bodies 90 arranged in the circumferential direction has an extension portion that extends toward the coil body 90 that is to be connected in the circumferential direction.

As described above, the field winding 70 has the first winding portion 71a and the second winding portion 71b, and each of these winding portions 71a, 71b is wound around each main pole portion 62 with the first winding portion 71a disposed radially outward and the second winding portion 71b disposed radially inward. In this case, the first winding portion 71a is formed by connecting the coil bodies 90 attached to the main pole portions 62 in series in the circumferential direction. Similarly, the second winding portion 71b is formed by connecting the coil bodies 90 attached to the main pole portions 62 in series in the circumferential direction.

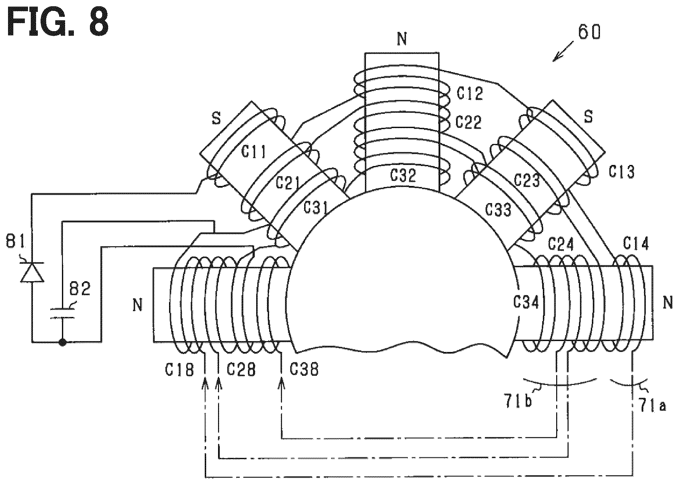

FIG. 8 is a schematic diagram showing a state in which the coil bodies 90 of the winding portions 71a and 71b are wound around the main pole portions 62 of the rotor core 61. In FIG. 8, the two radially outer layers (two conductor layers) form the first winding portion 71a, and the four radially inner layers (four conductor layers) form the second winding portion 71b. When a coil for one complete turn of the rotor formed by eight coil bodies 90 is referred to as one annular coil, the first winding portion 71a is composed of one annular coil, and the second winding portion 71b is composed of two annular coils. Each of these annular coils corresponds to a series winding portion formed by connecting in series the coil bodies 90 for one complete turn of the rotor. Here, the coil bodies 90 constituting the first winding portion 71a are designated C11, C12, C13, . . . , C18 in clockwise order. In addition, the coil bodies 90 constituting the first turn of the annular coil in the second winding portion 71b are designated C21, C22, C23, ..., C28, respectively, and the coil bodies 90 constituting the second turn of the annular coil are designated C31, C32, C33, ..., C38, respectively.

In the first winding portion 71a, one end of the first coil body C11 (a starting point of the first winding portion 71a) is connected to a cathode of the diode 81, and the other end is connected to the second coil body C12 adjacent to the first coil body C11 in the circumferential direction. Of the second and subsequent coil bodies C12 to C18, those adjacent to each other in the circumferential direction are connected in series. The eighth coil body C18 (the end coil of the first winding portion 71a) is connected to the capacitor 82 and to the coil body C21 which is the start coil of the second winding portion 71b.

In addition, in the second winding portion 71b, the coil bodies C21 to C28 are connected in series in the circumferential direction radially inside the first winding portion 71a (the coil bodies C11 to C18), and the coil bodies C31 to C38 are connected in series in the circumferential direction radially inside the coil bodies C21 to C28. The coil body C38, which is an end coil of the second winding portion 71b, is connected to the capacitor 82 and the anode of the diode 81.

Next, a description will be given of the structure relating to the connections of the winding portions 71a, 71b of the field winding 70 and the diode 81 and capacitor 82 which constitute the resonant circuit.

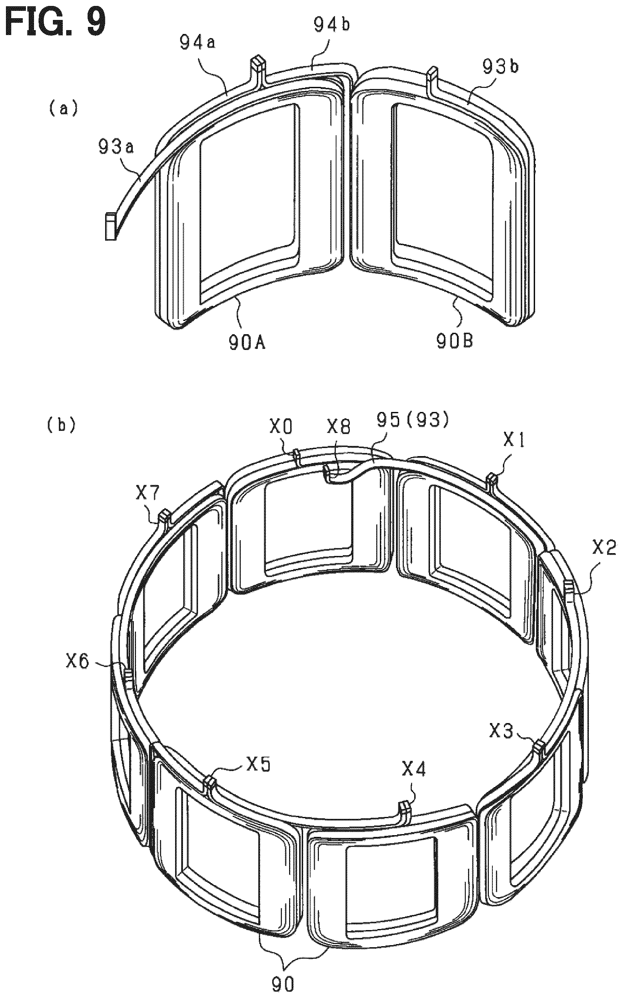

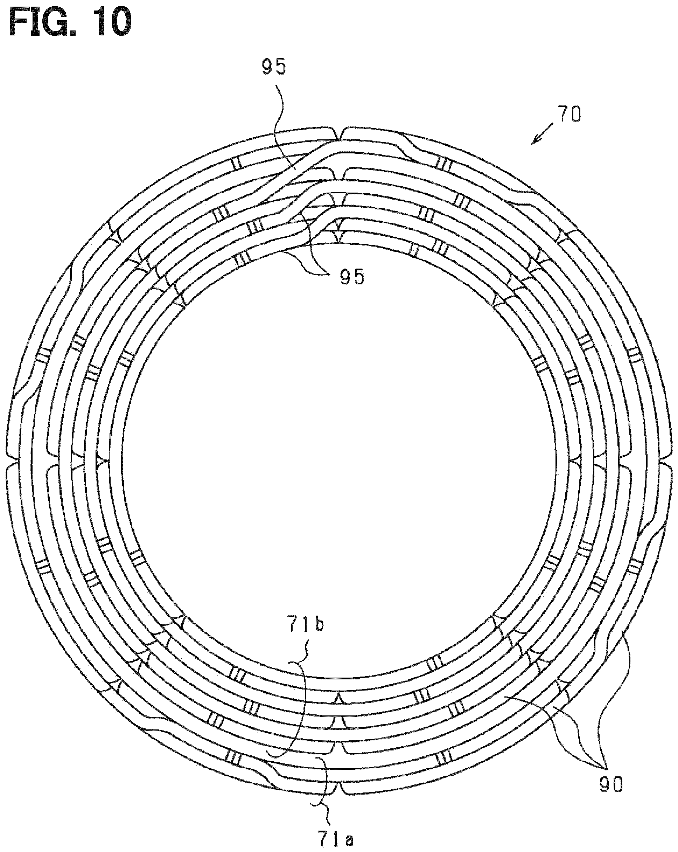

FIGS. 9(a) and 9(b) are perspective views showing an example of the configuration of the coil body 90, and FIG. 10 is a plan view showing a state in which a plurality of coil bodies 90 are arranged in the circumferential and radial directions. The coil connection structure described here corresponds to the structure shown in FIG. 7(b). In FIG. 10, the first winding portion 71a is composed of one row of annular coils on the outermost side in the radial direction, and the second winding portion 71b is composed of three rows of annular coils in the radial direction on the inner side in the radial direction of the first winding portion 71a.

As shown in FIG. 9(a), the first coil body 90A has the coil ends 93a, 94a on the inner and outer sides in the radial direction, respectively, and the second coil body 90B has the coil ends 93b, 94b on the inner and outer sides in the radial direction, respectively. Each of these coil ends 93, 94 extends in the circumferential direction as shown in the figure, and the coil ends 93 on the radially inner side of each coil body 90A, 90B are joined to each other, and the coil ends 94 on the radially outer side of each coil body 90A, 90B are joined to each other, thereby connecting them in series in the circumferential direction.

In FIG. 9(b), symbols X1 to X7 are joint portions between the coil ends. These joint portions X1 to X7 are arranged in the circumferential direction at one magnetic pole pitch, and the joint portions on the radially inner side and the joint portions on the radially outer side alternate with each other. Each of the positions of the joint portions X1 to X7 is in the vicinity of the d-axis of each magnetic pole. The symbol X0 is a terminal portion connected to the coil body 90 of another row, or to the diode 81 and the capacitor 82 that constitute the resonant circuit. In addition, one of the coil ends 93 on the radially inner side of the coil body 90 (the coil end 93 that terminates after one complete turn of the rotor) extends toward the adjacent magnetic pole in the circumferential direction and serves as a jumper portion 95 connected to another row of coil bodies 90 on the radially inner side, and a tip of the jumper portion 95 serves as a terminal portion connected to another coil body 90. The jumper portion 95 extends in an offset state in the radial direction and is a radial switching line that switches between the rows in the radial direction of the coil body 90.

As shown in FIG. 10, the first winding portion 71a and the second winding portion 71b are connected by the jumper portion 95 of one coil body 90 of the first winding portion 71a. In addition, in the second winding portion 71b, of the three radial rows of annular coils, the annular coil in the first outer row and the annular coil in the second outer row are connected by the jumper portion 95 extending from the annular coils in the first outer row, and the annular coil in the second outer row and the annular coil in the third outer row are connected by the jumper portion 95 extending from the annular coils in the second outer row.

In FIG. 10, the first winding portion 71a and the second winding portion 71b are connected in such a manner that the jumper portion 95 is provided at the coil end 93 on the radially inner side of the first winding portion 71a. However, this may be modified so that the jumper portion 95 is provided at the coil end 93 on the radially inner side of the first outer row of annular coils (the annular coil closest to the first winding portion 71a) of the three radial rows of annular coils in the second winding portion 71b. In this case, it is preferable that the tip of the coil end 93 of the coil body 90 in the second winding portion 71b is offset radially outward to form the jumper portion 95. Alternatively, the jumper portion 95 may be provided on both the coil end 93 on the radially inner side in the first winding portion 71a and the coil end 93 on the radially inner side of the outer first row among the three radial rows of annular coils in the second winding portion 71b. It is also possible to configure the coil to have the jumper portion 95 provided on at least one of the coil end 94 on the radially outer side in the first winding portion 71a and the coil end 94 on the radially outer side of the first outer row among the three radial rows of annular coils in the second winding portion 71b.

The coil body 90 of the first winding portion 71a and the coil body 90 of the second winding portion 71b are preferably spaced apart from each other, with an annular gap being formed between the two winding portions 71a and 71b. Alternatively, a plate-shaped partition member extending in the circumferential direction may be provided between each of the winding portions 71a, 71b. The partition member may be made of a magnetic material, and more specifically, may be made of laminated steel plates laminated in the radial direction.

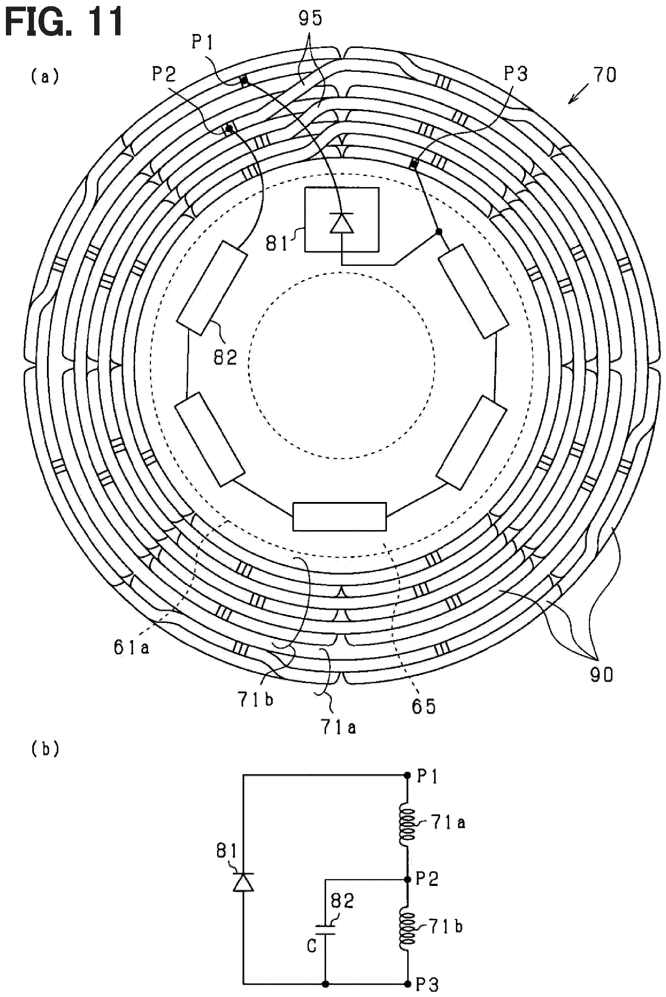

FIG. 11 is a diagram showing the connection state of each of the winding portions 71a, 71b with the diode 81 and the capacitor 82.

In FIG. 11(a), the cylindrical portion 61a of the rotor core 61 is shown by a virtual line, and the diode 81 and the capacitor 82 are fixed to an axial end surface of the cylindrical portion 61a. That is, one axial end face of the cylindrical portion 61a serves as an installation surface 65 on which the diode 81 and the capacitor 82 are disposed. The diode 81 and the capacitor 82 are arranged on a concentric circle concentric with a rotation center of the rotor 60. The capacitor 82 may be configured as a capacitor module in which a plurality of capacitor elements are connected in the circumferential direction. The points P1, P2, and P3 in FIG. 11(a) correspond to the points P1, P2, and P3 in the resonant circuit shown in FIG. 11(b), respectively.

In FIG. 11(a), a cathode of the diode 81 is connected to the point P1, and one end of the capacitor 82 (capacitor module) is connected to the point P2 which is a midpoint between the winding portions 71a and 71b. Furthermore, the other end of the capacitor 82 (capacitor module) and the anode of the diode 81 are connected to the point P3. In this case, the connection ends of the winding portions 71a, 71b corresponding to points P1 to P3 protrude axially on the same side as the installation surface 65, and are connected to the diode 81 and the capacitor 82 at the protruding portions.

According to the present embodiment described in detail above, the following excellent effects can be obtained.

In the field winding 70 of the rotor 60, the coil bodies 90 provided on each of the adjacent main pole portions 62 in the circumferential direction are connected to each other at their radially inner coil ends 93 and to each other at their radially outer coil ends 94, thereby being connected in series in the circumferential direction. In this case, the coil bodies 90 are connected in series in the circumferential direction by connecting the coil ends 93 to each other and the coil ends 94 to each other, so that excessive twisting of the rectangular wire in the radial direction does not occur. Therefore, the occurrence of a large load on the rectangular wire and damage to the insulating coating of the rectangular wire are suppressed. As a result, the field winding 70 can be wound easily and appropriately.

At least one of the coil ends 93, 94 of each of the coil bodies 90 arranged in the circumferential direction has an extension portion that extends in the circumferential direction toward the coil body 90 that is to be connected. In this case, by adding a simple configuration in which the coil ends 93, 94 of each coil body 90 are extended in the circumferential direction, the coil bodies 90 can be suitably connected to each other.

In particular, in the present embodiment, each coil body 90 is an α-winding coil using rectangular wire, which increases the coil space factor in the rotor 60 while allowing the coil bodies 90 to be easily connected to each other. In this case, by drawing out the coil ends 93, 94 of each coil body 90 in the axial direction, the space between adjacent coil bodies 90 in the circumferential direction is not used as a space for drawing out conductor wires, and the space factor is improved. This improves the work efficiency in producing the coil body 90 and in connecting the coil bodies 90 together, thereby improving productivity.

For example, in the configuration of FIGS. 7(a) and (b), in each of the coil bodies 90 adjacent in the circumferential direction, the joint portions of the radially inner coil ends 93 and the joint portions of the radially outer coil ends 94 are arranged alternately in the circumferential direction and at an interval of one magnetic pole pitch. In this case, by separating the radially inner and outer joint portions from each other, when these joint portions are joined by welding or the like, the work can be carried out easily and appropriately.

The field winding 70 has a configuration having a plurality of series winding portions each formed by connecting in series the coil body 90 for one complete turn of the rotor (i.e., a configuration having winding portions 71a, 71b each of which is an annular coil), and the series winding portions aligned in the radial direction are connected in series to each other. At least one of the tips of the coil end 93 on the inner layer side of the coil body 90 in the radially outer series winding portion (first winding portion 71a) and the coil end 93 on the inner layer side of the coil body 90 in the radially inner series winding portion (second winding portion 71b) among the series winding portions lined up in the radial direction is offset in the radial direction, and the series winding portions are connected to each other at an offset portion. Alternatively, instead of connecting the coil ends 93 on the inner layer side of each of the series winding portions arranged in the radial direction as described above, a configuration is adopted in which the coil ends 94 on the outer layer side are connected to each other. In this case, by radially shifting the coil ends 93, 94 of the coil body 90 in each series winding portion (first and second winding portions 71a, 71b) by the minimum necessary amount, the series winding portions aligned in the radial direction can be suitably connected to each other.

In a configuration in which the field winding 70 has the first winding portion 71a and the second winding portion 71b and the diode 81 and the capacitor 82 are connected to the field winding 70 to form a resonant circuit, the first winding portion 71a and the second winding portion 71b are each a series winding portion formed by connecting in series at least one complete turn of the coil body 90 for one complete turn of the rotor, and these winding portions 71a, 71b are connected in series. In this configuration, the first winding portion 71a is disposed on the radially outer side (the stator 50 side), and the second winding portion 71b is disposed on the radially inner side (the side opposite the stator). This makes it easier for the first winding portion 71a to absorb harmonic magnetic flux from the stator 50, and allows the rotor 60 to generate an excitation current efficiently.

In addition, in the first winding portion 71a and the first outer row of the three radial rows of annular coils in the second winding portion 71b, at least one of the coil ends 93, 94 on the inner layer side and the outer layer side is offset in the radial direction, and the winding portions 71a, 71b are connected to each other at the offset portion. In other words, at least one of the inner end and outer end of the first winding portion 71a (specifically, the coil end 93, 94 of either the inner or outer layer) and the inner end and outer end of the second winding portion 71b on the same side as the first winding portion 71a (specifically, the coil end 93, 94 of the inner or outer layer of the annular coil closest to the first winding portion 71a on the same side as the first winding portion 71a) are offset in the radial direction, and the winding portions 71a, 71b are connected to each other at the offset portion. This makes it possible to achieve high efficiency in excitation of the rotor 60 as described above, while also allowing suitable connection to be made between the winding portions 71a, 71b arranged in the radial direction.

One axial end surface of the cylindrical portion 61a of the rotor core 61 serves as the installation surface 65 on which the diode 81 and the capacitor 82 are disposed. In addition, in the first winding portion 71a and the second winding portion 71b, the connection ends connected to the diode 81 and the capacitor 82 are configured to protrude in the axial direction on the same side as the installation surface 65, and are connected to the diode 81 and the capacitor 82 at the protruding portions. This makes it easy to connect the winding portions 71a, 71b to the diode 81 and the capacitor 82 in the rotor 60, and allows a resonant circuit made up of these components to be suitably formed.

Other Embodiments:

The above embodiment may be modified as follows, for example.

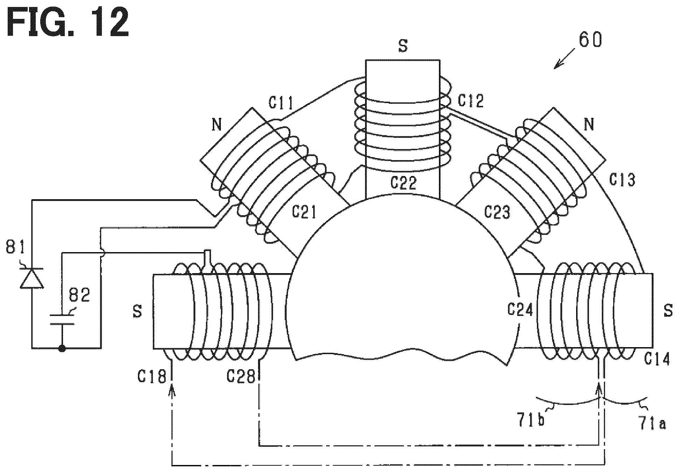

The winding structure described with reference to FIG. 8 may be modified as shown in FIG. 12. In FIG. 12, the two radially outer layers (two conductor layers) form the first winding portion 71a, and the four radially inner layers (four conductor layers) form the second winding portion 71b. Here, in the first winding portion 71a, a ring coil (series winding portion) is formed by eight coil bodies 90 in the circumferential direction, and similarly, in the second winding portion 71b, a ring coil (series winding portion) is formed by eight coil bodies 90 in the circumferential direction. However, the number of layers in the radial direction of each coil body 90 differs between the first winding portion 71a and the second winding portion 71b, with the number of layers of the coil body 90 of the first winding portion 71a being two and the number of layers of the coil body 90 of the second winding portion 71b being four. In FIG. 12, the coil bodies 90 constituting the first winding portion 71a are designated C11, C12, C13, ... , C18 in clockwise order. The coil bodies 90 constituting the second winding portion 71b are designated C21, C22, C23, . . . , C28 in the clockwise direction.

In this way, the number of radial layers in each coil body 90 may be other than two, and may be a multiple of two.

As a connection configuration between the first winding portion 71a and the second winding portion 71b, instead of a configuration in which each winding portion 71a, 71b is connected by the jumper portion 95 provided at the coil ends 93, 94 of each winding portion 71a, 71b, a configuration in which each winding portion 71a, 71b is connected using a relay wire may be used.

The coil body 90 may be configured to use a round wire as the conductor material instead of the rectangular wire. The coil body 90 may be other than an α-winding coil. For example, the coil body 90 may be an edgewise winding coil.

The rotary electric machine is not limited to the inner rotor type rotary electric machine, and may be an outer rotor type rotary electric machine. In this case, the main pole portion 62 protrudes radially inward from the annular yoke portion of the rotor core. In the field winding 70, the first winding portion 71a is preferably arranged on the radially inner side (the stator 50 side), and the second winding portion 71b is preferably arranged on the radially outer side (the side opposite to the stator).

The rotary electric machine is not limited to a star-connected rotary electric machine, and may be a delta-connected rotary electric machine.

The stator core may be a stator core having no teeth.

The configuration for supplying field current to the field winding is not limited to the circuit shown in FIG. 4. For example, it may include a brush electrically connected to the field winding and a power source electrically connected to the brush. In this case, the control unit 30 controls the field current flowing through the field winding by increasing the output voltage of the power source electrically connected to the brush when the rotor 60 is in a high-speed rotation state. When brushes are used, it is not necessary to flow the harmonic currents through the stator windings to induce field currents.

The rotary electric machine is not limited to a rotary electric machine used as a vehicle-mounted main machine, and may be, for example, a rotating electric machine used as an ISG (Integrated Starter Generator) that has function as a motor and generator.

The mobile object on which the rotating electric machine 40 is mounted is not limited to a vehicle, and may be, for example, an aircraft or a ship. Furthermore, the system including the rotating electric machine 40 is not limited to a system mounted on a moving body, but may be a stationary system.

The technical ideas extracted from the above-described embodiments will be described below.

Configuration 1:

A winding field rotor (60) is applied to a winding field type rotating electric machine (40), and includes a rotor core (61) having main pole portions (62) provided for each magnetic pole arranged in a circumferential direction and protruding in a radial direction, and a field winding (70) wound around the main pole portions.

The field winding has coil bodies (90) formed by winding a conductor wire in multiple layers in the radial direction for each of the main pole portions, and each of the coil bodies is connected in series in the circumferential direction.

Each of the coil bodies has an inner end (93) which is one end of the conductor wire at a position on a radially inner side of the coil body, and an outer end (94) which is the other end of the conductor wire at a position on a radially outer side of the coil body.

In the coil body, the inner end is connected to the inner end of another coil body adjacent to the coil body on one circumferential side, and the outer end is connected to the outer end of another coil body adjacent to the coil body on the other circumferential side.

Configuration 2:

In the winding field rotor according to configuration 1, at least one of the inner end and the outer end of each of the coil bodies adjacent in the circumferential direction has an extension portion that extends toward the coil body that is connected in the circumferential direction.

Configuration 3:

In the winding field rotor according to configuration 1, the coil body is an $\alpha$-winding coil using a rectangular wire as the conductor wire and having an inner coil portion (91) on a radial inside and an outer coil portion (92) on a radial outside.
The inner coil portion is provided with the inner end, and the outer coil portion is provided with the outer end.
In the winding field rotor according to configuration 1, at least one of the inner end and the outer end of each of the coil bodies adjacent in the circumferential direction has an extension portion that extends toward the coil body that is connected in the circumferential direction.

Configuration 4:

In the winding field rotor according to configuration 2 or 3, in each of the coil bodies adjacent in the circumferential direction, each of joint portions at the inner end and each of joint portions at the outer end are alternated in the circumferential direction and are provided at intervals of one magnetic pole pitch.

Configuration 5:

In the winding field rotor according to any one of configurations 1 to 4, the field winding has a plurality of series winding portions formed by connecting in series the coil body for one complete turn of the rotor wound around each of the main pole portions arranged in the circumferential direction, and the series winding portions arranged in the radial direction are connected in series to each other.

Configuration 6:

In the winding field rotor according to configuration 5, at least one of the inner end of the series winding portion on the radially outer side and the inner end of the series winding portion on the radially inner side among the series winding portions lined up in the radial direction, or at least one of the outer end of the series winding portion on the radially outer side and the outer end of the series winding portion on the radially inner side among the series winding portions lined up in the radial direction, is offset in the radial direction, and the series winding portions are connected to each other at an offset portion.

Configuration 7:

In the winding field rotor according to any one of configurations 1 to 4, the field winding has a first winding portion (71a) and a second winding portion (71b) connected in series with each other.
A rectifying element (81) is connected between both ends of the first winding portion and the second winding portion, and a capacitor (82) is connected in parallel to the second winding portion (71b).
The first winding portion and the second winding portion are serial winding portions formed by connecting in series the coil bodies wound around each of the main pole portions arranged in the circumferential direction, for at least one turn of the rotor, and are wound around the main pole portions in the radial direction such that the first winding portion is wound on a stator (50) side of the rotating electric machine, and the second winding portion is wound on the opposite side to the stator.
Either the inner end or the outer end of the first winding portion and at least one of the inner end or the outer end of the second winding portion that is on the same side as the first winding portion are radially offset, and the first winding portion and the second winding portion are connected at an offset portion.

Configuration 8:

In the winding field rotor according to configuration 7, the rotor core has a yoke portion (61a) extending in the circumferential direction, and the main pole portion protrudes in the radial direction from the yoke portion.
One end surface in an axial direction of the yoke portion serves as an installation surface (65) on which the rectifying element and the capacitor are disposed.
In the first winding portion and the second winding portion, connection ends connected to the rectifying element and the capacitor protrude on the same side as the installation surface in the axial direction, and protruding portions are connected to the rectifying element and the capacitor.
Although the present disclosure has been described in accordance with the embodiments, it is understood that the present disclosure is not limited to the embodiments and structures disclosed therein. The present disclosure encompasses various modifications and variations within the scope of equivalents. In addition, while the various combinations and configurations, which are preferred, other combinations and configurations, including more, less or only a single element, are also within the spirit and scope of the present disclosure.

**Claims**

1. A winding field rotor (60) applied to a winding field type rotating electric machine (40), comprising:

   a rotor core (61) having main pole portions (62) provided for each magnetic pole arranged in a circumferential direction and protruding in a radial direction; and
   a field winding (70) wound around the main pole portions; wherein
   the field winding has coil bodies (90) formed by winding a conductor wire in multiple layers in the radial direction for each of the main pole portions, and each of the coil bodies is connected in series in the circumferential direction.
   each of the coil bodies has an inner end (93) which is one end of the conductor wire at a position on a radially inner side of the coil body, and an outer end (94) which is the other end of the conductor wire at a position on a radially outer side of the coil body, and
   in the coil body, the inner end is connected to the inner end of another coil body adjacent to the coil body on one circumferential side, and the outer end is connected to the outer end of another coil body adjacent to the coil body on the other circumferential side.

2. The winding field rotor according to claim 1, wherein at least one of the inner end and the outer end of each of the coil bodies adjacent in the circumferential direction has an extension portion that extends toward the coil body that is connected in the circumferential direction.

3. The winding field rotor according to claim 1, wherein

   the coil body is an α-winding coil using a rectangular wire as the conductor wire and having an inner coil portion (91) on a radial inside and an outer coil portion (92) on a radial outside,
   the inner coil portion is provided with the inner end, and the outer coil portion is provided with the outer end, and
   at least one of the inner end and the outer end of each of the coil bodies adjacent in the circumferential direction has an extension portion that extends toward the coil body that is connected in the circumferential direction.

4. The winding field rotor according to claim 2 or 3, wherein
   in each of the coil bodies adjacent in the circumferential direction, each of joint portions at the inner end and each of joint portions at the outer end are alternated in the circumferential direction and are provided at intervals of one magnetic pole pitch.

5. The winding field rotor according to claim 1, wherein the field winding has a plurality of series winding portions formed by connecting in series the coil body for one complete turn of the rotor wound around each of the main pole portions arranged in the circumferential direction, and the series winding portions arranged in the radial direction are connected in series to each other.

6. The winding field rotor according to claim 5, wherein at least one of the inner end of the series winding portion on the radially outer side and the inner end of the series winding portion on the radially inner side among the series winding portions lined up in the radial direction, or at least one of the outer end of the series winding portion on the radially outer side and the outer end of the series winding portion on the radially inner side among the series winding portions lined up in the radial direction, is offset in the radial direction, and the series winding portions are connected to each other at an offset portion.

7. The winding field rotor according to claim 1, wherein

   the field winding has a first winding portion (71a) and a second winding portion (71b) connected in series with each other,
   a rectifying element (81) is connected between both ends of the first winding portion and the second winding portion, and a capacitor (82) is connected in parallel to the second winding portion (71b),
   the first winding portion and the second winding portion are serial winding portions formed by connecting in series the coil bodies wound around each of the main pole portions arranged in the circumferential direction, for at least one turn of the rotor, and are wound around the main pole portions in the radial direction such that the first winding portion is wound on a stator (50) side of the rotating electric machine, and the second winding portion is wound on the opposite side to the stator, and
   either the inner end or the outer end of the first winding portion and at least one of the inner end or the outer end of the second winding portion that is on the same side as the first winding portion are radially offset, and the first winding portion and the second winding portion are connected at an offset portion.

8. The winding field rotor according to claim 7, wherein

   the rotor core has a yoke portion (61a) extending in the circumferential direction, and the main pole portion protrudes in the radial direction from the yoke portion,
   one end surface in an axial direction of the yoke

21 EP 4 604 366 A1 22

portion serves as an installation surface (65) on which the rectifying element and the capacitor are disposed, and

in the first winding portion and the second winding portion, connection ends connected to the rectifying element and the capacitor protrude on the same side as the installation surface in the axial direction, and protruding portions are connected to the rectifying element and the capacitor.

12

# FIG. 1

# FIG. 2

# FIG. 3

# FIG. 4

$$\left( \begin{array}{l} \cdot f1 = \dfrac{1}{2 \times \sqrt{L1 \times C}} \\[2mm] \cdot f2 = \dfrac{1}{2 \times \sqrt{L2 \times C}} \end{array} \right)$$

(a)

FIG. 5

(b)

(c)

# FIG. 6

# FIG. 7

(a)

93 (INNER SIDE)  94 (OUTER SIDE)  93 (INNER SIDE)  94 (OUTER SIDE)

90A   90B   90A   90B

(b)

93 (INNER SIDE)  94 (OUTER SIDE)  93 (INNER SIDE)

90A   90B   90A   90B

# FIG. 8

# FIG. 9

(a)

(b)

# FIG. 10

# FIG. 11

(a)

(b)

# FIG. 12

## INTERNATIONAL SEARCH REPORT

International application No.

**PCT/JP2023/033505**

| A. | CLASSIFICATION OF SUBJECT MATTER |
|---|---|

*H02K 3/18*(2006.01)i; *H02K 3/28*(2006.01)i
FI:   H02K3/18 P; H02K3/28 J

According to International Patent Classification (IPC) or to both national classification and IPC

| B. | FIELDS SEARCHED |
|---|---|

Minimum documentation searched (classification system followed by classification symbols)

H02K3/18; H02K3/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2008-178211 A (DENSO CORP.) 31 July 2008 (2008-07-31)<br>paragraphs [0015], [0018]-[0019], [0023], [0032]-[0033], [0036]-[0037], fig. 1-2, 4-5 | 1-8 |
| Y | JP 2002-010553 A (ASMO CO., LTD.) 11 January 2002 (2002-01-11)<br>paragraphs [0024]-[0026], fig. 1-3 | 1-8 |

☐ Further documents are listed in the continuation of Box C.       ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 November 2023** | **05 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/033505**

| Patent document cited in search report | | | Publication date (day/month/year) | Patent family member(s) | Publication date (day/month/year) |
|---|---|---|---|---|---|
| JP | 2008-178211 | A | 31 July 2008 | US 2008/0079375 A1 paragraphs [0073]-[0082], [0206]-[0219], fig. 35-36, 38-39A | |
| JP | 2002-010553 | A | 11 January 2002 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022165072 A

- JP 2012222941 A